# EUROPÄISCHE PATENTSCHRIFT

(11) **EP 2 174 371 B1**
(45) Veröffentlichungstag und Bekanntmachung des Hinweises auf die Patenterteilung: **24.07.2013**
(21) Anmeldenummer: 08749351.6
(22) Anmeldetag: 06.05.2008
(51) Int. Cl.: H01M 8/24, H01M 8/02, H01M 8/12

(54) **Verfahren zur Herstellung einer Brennstoffzelle**
Method for manufacturing a fuel cell
Procédé de fabrication d'une pile à combustible

(30) Priorität: 26.07.2007 DE 102007034967
(43) Veröffentlichungstag der Anmeldung: 14.04.2010
(73) Patentinhaber: PLANSEE SE, 6600 Reutte (AT)
(72) Erfinder: BRANDNER, Marco, A-6600 Höfen (AT); FRANCO, Thomas, 73460 Hüttlingen (DE); KUNSCHERT, Georg, A-6600 Pflach (AT); ZACH, Reinhold, A-6600 Reutte (AT); ZOBL, Gebhard, A-6677 Schattwald (AT)
(74) Vertreter: Kador, Utz Ulrich
(86) Internationale Anmeldenummer: PCT/EP2008/003630
(87) Internationale Veröffentlichungsnummer: WO 2009/012829

(56) Entgegenhaltungen:
- EP-A- 1 278 259
- WO-A-2004/030133
- WO-A1-2008/138824
- AT-U1- 8 975
- GB-A- 2 420 440
- US-A1- 2002 048 699

## Beschreibung

Die Erfindung bezieht sich auf ein verfahren zur Herstellung einer Brennstoffzelle mit einem pulvermetallurgisch hergestellten, porösen Substrat, auf das die elektrochemisch aktiven Zellschichten aufgetragen sind und das in dem Zentralbereich einer Platte angeordnet ist, in deren Randbereich Gasdurchtrittsöffnungen vorgesehen sind.

Unter den verschiedenen Brennstoffzellentypen zeichnet sich die Hochtemperatur-Brennstoffzelle oder oxidkeramische Festelektrolyt-Brennstoffzelle ("Solid Oxide Fuel Cell"; SOFC) aufgrund ihres hohen, elektrischen Wirkungsgrades sowie der möglichen Nutzung der im hohen Temperaturbereich anfallenden Abwärme z. B. für die stationäre Kraft-Wärme-Kopplung, als besonders geeignet ab. So lassen sich in HybridSystemen, bei denen die SOFC in Gasturbinenprozesse integriert wird, elektrische Wirkungsgrade von 60% bis 70% erreichen. Aber auch für mobile Anwendungen, beispielsweise zur Versorgung von LKW- oder PKW-Bordnetzen (APU - auxiliary power unit) sind SOFC-Systeme von großem Interesse. Sie bieten das Potential einer effizienten und damit kraftstoffsparenden Stromversorgung, wobei sowohl herkömmliche Kraftstoffe (Benzin, Diesel, Erdgas) als auch reiner Wasserstoff verwendet werden können.

Während die tubulare Bauform für stationäre Kraftwerks-Anwendungen besonders geeignet ist, bietet die planare SOFC für dezentral-stationäre und mobile Anwendungen wegen der kürzeren Stromleitungspfade und damit höheren flächenspezifischen Leistungsdichte Vorteile.

Die jüngste Generation von SOFC's weist einen porösen metallischen Körper auf, der als Substrat die tragende Funktion für die Elektrodenschichen und die Elektrolytschicht übernimmt (metalsupported cell; MSC). Die MSC ist insbesondere für mobile Anwendungen von Interesse, weil sie eine bessere thermische Zyklierbarkeit, eine hohe mechanische Belastbarkeit und eine hohe Reoxidationsstabilität bei geringen Materialkosten und geringer Zelldicke besitzt. Zudem kann die Integration einer MSC in einen Brennstoffstapel oder "Stack" durch kommerziell verfügbare Löt- und Schweißprozesse realisiert werden.

Für das Substrat wird meist hochlegierter Chromstahl verwendet. Als Substrate werden insbesondere pulvermetallurgisch hergestellte, poröse Körper (AT 008975 U1), Gewebe oder Gestricke (EP 1 318 560 A2, WO 02/101859 A2), perforierte Bleche oder Streckmetall (US 2005/01424226 A1, GB 2400723 A; GB 2422479 A) verwendet. Bei einer planaren SOFC kann das Substrat in einen schmelzmetallurgisch hergestellten Blechrahmen eingeschweißt werden, der die Gasdurchtrittsöffnungen, also z. B. die Brenngas- und Abgasöffnungen zur Brenngaszufuhr bzw. Abgasabfuhr zu bzw. von der Brennstoffzelle aufweist. Damit wird eine Platte mit den Gasdurchtrittsöffnungen oder Manifold im Randbereich gebildet. Die Abdichtung des anodenseitigen und kathodenseitigen Gasraumes gegeneinander erfolgt über den gasdichten Elektrolyten, der vom porösen Substratbereich über die Schweißnaht auf den Blechrahmen hinaus reicht (EP 1 278 259 A2).
Die GB 2 420 440 betrifft die Gasverteilung in Brennstoffzellen. Offenbart wird eine Brennstoffzellenschicht mit einem Metallsubstrat, welches poröse und nicht-poröse Bereiche umfasst. Die porösen Bereiche sind von den nicht-porösen Bereichen umgrenzt.
Eine Festoxid-Brennstoffzelle ist in der US 2002/0048699 offenbart. Das Substrat besteht aus ferritischem, rostfreien Stahl, welche einen porösen und nicht-porösen Bereich umfasst. Auch in der US 2002/0048699 sind die porösen Bereiche sind von den nicht-porösen Bereichen umgrenzt.
Eine Kathoden-geträgerte Brennstoffzelle ist in der WO 2004/030133 offenbart. Das Kathoden-Trägermaterial umfasst einen porösen Teil aus einer Legierung, welche aus Eisen, Chrom und insbesondere Edelstahl gefertigt ist.
In der WO 2008/138824 wird Trägervorrichtung für eine elektrochemische Funktionseinheit offenbart. Die Trägervorrichtung umfasst einen Fensterbereich aus porösem, gasdurchlässigen Material sowie einen gasundurchlässigen Rahmenbereich.

Das Substrat kann ein perforiertes Blech (WO 02/35628 A1) sein, oder ein pulvermetallurgisch hergestellter Körper (EP 1278259 A2).

Der Nachteil der perforierten Bleche liegt vor allem in ihrer schlechten Beschichtbarkeit mit einer feinstrukturierten Anode aber auch in einer ungleichmäßigen Gasverteilung hin zur Anode. Nach US 2005/0175884 A1 wird daher vorgeschlagen, die Löcher in dem Blech im Winkel anzubringen. Dies ist jedoch schwierig und kostenintensiv. Nach WO 2004/059765 A2 wird eine Füllung der Löcher des Blechs mit Anodenmaterial vorgeschlagen, um die Beschichtbarkeit des Substrats zu verbessern. Es hat sich jedoch gezeigt, dass alle Löcher fehlerfrei gefüllt sein müssen, um die erforderliche Prozesssicherheit zu gewährleisten. Nach WO 2006/136257 A1 wird ein feinstrukturiertes Übergangselement, z. B. ein Nickelnetz, zwischen dem perforierten Blech und der Anodenbeschichtung vorgeschlagen, was jedoch mit zusätzlichen Kosten verbunden ist.

Verglichen mit perforierten Blechen bieten pulvermetallurgisch hergestellte, poröse Substrate eine bessere Beschichtbarkeit und Gasverteilung. Um das poröse Substrat gasdicht mit dem Blechrahmen zu verbinden, wird nach EP 1 278 259 A2 der Rand des Substrats gasdicht verdichtet, bevor er mit dem Blechrahmen verschweißt wird, um die Platte zu bilden. Durch die Integration des porösen Substrats mit dem Blechrahmen werden jedoch mikrostrukturell unterschiedliche, oftmals auch unterschiedliche Legierungen, miteinander verbunden. Aus thermomechanischen Gründen ist dieser Zustand nicht wünschenswert, weil hohe Spannungen in den Zellverbund induziert werden können. Weiterhin kommt es durch die umlaufend geführte Schweißnaht zwischen dem Blechrahmen und dem Substrat zu einem Verzug der Platte. Auch birgt die Schweißnaht selbst das Risiko von Defekten, die einen Leckagepfad zwischen Anoden- und Kathodenseite bedeuten würden. Außerdem führt das in einen Blechrahmen eingeschweißte Substrat zu hohen Materialkosten, da beim Zuschnitt des Rahmens ein hoher Anteil des Blechs als Abfallmaterial anfällt.

Aufgabe der Erfindung ist es daher, ein verfahren zur Herstellung einer Brennstoffzelle bereitzustellen, die eine prozesssichere Beschichtung mit Anode, Elektrolyt und Kathode und zugleich eine geeignete Basis für die Stackintegration der Zelle bei geringem Materialeinsatz gewährleistet.

Dies wird erfindungsgemäß durch ein Verfahren zur Herstellung einer Brennstoffzelle mit einem pulvermetallurgisch hergestellten, porösen Substrat, auf das die elektrochemisch aktiven Zellschichten aufgetragen sind und das im zentralen Bereich einer Platte angeordnet ist, in deren Randbereich Gasdurchtrittsöffnungen vorgesehen sind, wobei die Platte unter Bildung eines Substratbereichs und des Randbereichs einstückig ausgebildet und der Randbereich gasdicht verdichtet ist, und wobei zur Bildung der Platte ein planarer, pulvermetallurgischer, poröser Körper hergestellt wird, der Randbereich des Körpers bis zur Gasdichte verdichtet und mit den Gasdurchtrittsöffnungen versehen wird und die elektrochemisch aktiven Zellschichten auf den Substratbereich der Platte aufgetragen werden, dadurch gekennzeichnet dass die Verdichtung des Randbereichs des Körpers zum Randbereich der Platte durch uniaxiales Pressen oder Walzen erfolgt, erreicht.

Zur Herstellung der Platte der durch das erfindungsgemäße verfahren hergestellten SOFC wird zunächst ein planarer, pulvermetallurgischer, poröser Körper hergestellt, der vorzugsweise aus einer Eisen-Chrom-Legierung besteht. Der Körper kann dabei entsprechend AT 008 975 U1 hergestellt sein.

Das heißt, er kann aus einer Legierung aus
15 bis 35 Gew.% Cr;
0,01 bis 2 Gew.% eines oder mehrerer Elemente der Gruppe Ti, Zr, Hf, Mn, Y, Sc, Seiten Erdmetalle;
0 bis 10 Gew.% Mo und/oder Al;
0 bis 5 Gew% eines oder mehrerer Metalle der Gruppe Ni, W, Nb, Ta;
0,1 bis 1 Gew.% O;

Rest Fe und Verunreinigungen bestehen, wobei zumindest ein Metall der Gruppe Y, Sc, Selten Erdmetalle und zumindest ein Metall der Gruppe Cr, Ti, Al, Mn ein Mischoxid bilden können.

Die Auswahl der Pulverfraktion für den Körper muss so getroffen werden, dass Defekte in der Oberfläche, die naturgemäß aus Abweichungen von einer optimalen Packungsdichte resultieren, ausreichend klein gehalten werden, um eine gute Beschichtbarkeit zu gewährleisten. Zur Bildung des planaren, pulvermetallurgischen, porösen Körpers wird dabei vorzugsweise eine Pulverfraktion mit einer Teilchengröße von < 150 µm, insbesondere < 100 µm verwendet. Die Verwendung feinerer Pulverfraktionen würde zwar die Beschichtbarkeit weiter verbessern, bringt jedoch aufgrund einer höheren inneren Oberfläche eine Verschlechterung der Hochtemperaturoxidationsstabilität mit sich.

Aus Pulver und einem Bindemittel wird ein planarer Grünkörper mit einer Dicke von vorzugsweise 0,3 bis 1,5 mm hergestellt. Nach dem Entbindern des Grünkörpers wird der Körper gesintert, wobei er nach dem Sintern eine Porosität von vorzugsweise 20 bis 60 %, insbesondere 40 bis 50 % aufweist. Die Porosität stellt die Dichte des porösen Körpers bezogen auf die Dichte der Legierung dar.

Anschließend wird der Randbereich des porösen Körpers verdichtet, bis er gasdicht ist. Die Abmessungen des verdichteten Randbereichs ergeben sich aus der notwendigen Fläche für die Gasdurchtrittsöffnungen und Dichtflächen, insbesondere mit der Elektrolytschicht und der Kontaktplatte, wie nachstehend noch näher erläutert wird. Die Kontaktplatte wird im Übrigen häufig auch als Interkonnektor bezeichnet und ist daher als solcher zu verstehen.

Die Verdichtung des Körpers im Randbereich erfolgt erfindungsgemäß durch uniaxiales Pressen oder Profilwalzen. Der Übergang zwischen dem zentralen porösen Substratbereich der Platte und dem verdichteten Randbereich kann als Stufe ausgebildet sein. Vorzugsweise wird beim Verdichten jedoch ein kontinuierlicher, stufenloser Übergang zwischen dem Substratbereich und dem verdichteten Randbereich hergestellt, da Kanten und dergleichen Diskontinuitäten Spannungen in der Platte hevorrufen können. Um eine Entspannung des Gefüges der Platte nach dem Verdichtungsprozess zu erreichen, kann gegebenenfalls eine Glüh- oder dergleichen Wärmebehandlung angeschlossen werden.

Anschließend wird der dichte Randbereich der Platte durch Prägen, Stanzen, Schneiden oder dergleichen mit den Gasdurchtrittsöffnungen versehen. Gegebenenfalls kann der Randbereich in einem Prozessschritt beim Verdichten mit den Gasdurchtrittsöffnungen versehen werden.

Auch ist es möglich, den Randbereich der Platte mit weiteren Strukturen zu versehen, beispielsweise durch Prägen von Versteifungs- und/oder Verbindungsstrukturen beispielsweise mit der Elektrolytschicht und/oder der Kontaktplatte.

Schließlich werden die elektrochemisch aktiven Zellschichten aufgetragen, d.h. normalerweise auf den Substratbereich der Platte die Anode, auf die Anode der Elektrolyt und auf den Elektrolyt die Kathode. Die Anode kann beispielsweise durch ein Cermet gebildet sein, beispielsweise aus Nickel und Yttrium-stabilisiertem Zirkoniumdioxid. Die Elektrolytschicht ist gasdicht und kann beispielsweise aus Yttrium-stabilisiertem Zirkoniumdioxid oder einer anderen Sauerstoffionenleitenden Keramik bestehen. Die Kathode besteht aus einer elektronisch oder elektronisch und ionisch leitfähigen Keramik, beispielsweise Lanthan-Strontium-Kobalt-Eisenoxid.

Zwischen der Elektrolytschicht und der Kathode kann eine keramische Diffusions-Barriereschicht vorgesehen sein, beispielsweise aus Cer-Gadolinium-Oxid. Weiterhin kann auch zwischen dem Substrat (FeCr-Legierung) und der nickelhaltigen Anode eine Diffusionsbarriere vorgesehen werden.

Das Beschichten mit den elektrochemisch aktiven Zellschichten kann durch nasschemische Beschichtung, beispielsweise Siebdruck, oder Nasspulverspritzen mit anschließender Sinterung oder durch thermische Spritzverfahren erfolgen, beispielsweise Hochgeschwindigkeitsflammspritzen oder Plasmaspritzen.

Um den kathodenseitigen Oxidationsmittelraum gegenüber dem gegenüberliegenden Brenngasraum der Platte abzudichten, muss die gasdichte Elektrolytschicht zumindest einen Teil des verdichteten Randbereichs der Platte abdichten. Um eine besserere Haftung der Elektrolytschicht auf dem verdichteten Randbereich zu erzielen, wird der Randbereich vor der Beschichtung vorzugsweise aufgeraut, beispielsweise durch einen Sandstrahlprozess.

Alternativ zur unmittelbaren Beschichtung des Substratbereichs der einstückigen, pulvermetallurgisch hergestellten Platte mit verdichtetem Randbereich kann der Randbereich zunächst mit einer oder mehreren metallischen Komponenten, beispielsweise der Kontaktplatte verbunden werden, bevor die Beschichtung mit den elektrochemisch aktiven Zelischichten erfolgt.

Die nach dem erfindungsgemäßen verfahren hergestellte Brennstoffzelle oder SOFC mit einer einstückigen Platte, die einen porösen Zentralbereich als Substrat für die elektrochemisch aktiven Zellschichten und eine verdichteten gasdichten Randbereich mit den Gasdurchtrittsöffnungen und gegebenenfalls weiteren Strukturen aufweist, bietet erhebliche Vorteile und vor allem Kosteneinsparungen. So werden durch einen Wegfall der Schweißnaht zwischen dem porösen Substratkörper und dem Blechrahmen die Herstellungskosten wesentlich reduziert. Zugleich wird eine erhebliche Materialeinsparung erreicht. Weiterhin hat die Fertigung dieser einteiligen Platte den Vorteil, dass keine Verbindung mikrostrukturell oder gar chemisch unterschiedlicher Materialien vorgenommen wird. Zudem entfällt die Gefahr von Leckagen durch Risse oder Poren in der Schweißnaht. Je nach Konstruktion des Stacks bietet die einstückige Platte zusätzlich die Möglichkeit, die Bauhöhe pro Zelle zu reduzieren, denn die den elektrochemisch aktiven Zellschichten zugewandte Seite des porösen Substratbereichs in der Mitte der Platte liegt mit dem verdichteten Rand der Platte zumindest auf einer Höhe, während nach dem Stand der Technik, beispielsweise EP 1 278 259 A2, der Randbereich des Substrats auf dem Blechrahmen aufliegt.

Nachstehend ist eine Ausführungsform der nach erfindungsgemäßen verfahren hergestellten Brennstoffzelle anhand der Zeichnung beispielhaft näher erläutert. Darin zeigen:
Fig. 1 eine perspektivische Explosionsdarstellung von zwei Brennstoffzellen eines Brennstoffzellenstapels;
Fig. 2 einen Schnitt entlang der Linie II - II durch den rechten Teil der beiden Brennstoffzellen nach Fig. 1 in vergrößerter Wiedergabe;
Fig. 3 eine vergrößerte Darstellung des Bereichs A der Fig. 2; und
Fig. 4 eine vergrößerte teilweise Wiedergabe einer Vorderansicht des porösen Körpers beim Pressen zu einer Platte mit einem zentralen, porösen Substratbereich und verdichteten Randbereichen.

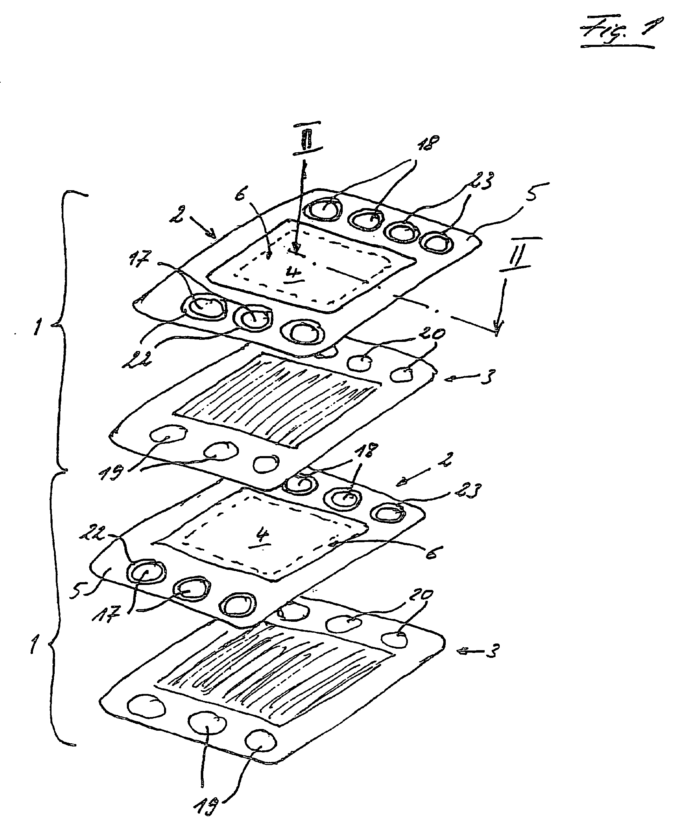

Gemäß Fig. 1 bis 3 besteht jede Zelle (1) aus einer pulvermetallurgischen Platte (2) und einer Kontaktplatte (Interkonnektor) (3).

Die pulvermetallurgische Platte (2) ist einstückig ausgebildet und weist im zentralen Bereich einen porösen Substratbereich (4) und einen verdichteten gasdichten Randbereich (5) auf, wobei der poröse Substratbereich (4) in Fig. 1 gestrichelt angedeutet ist.

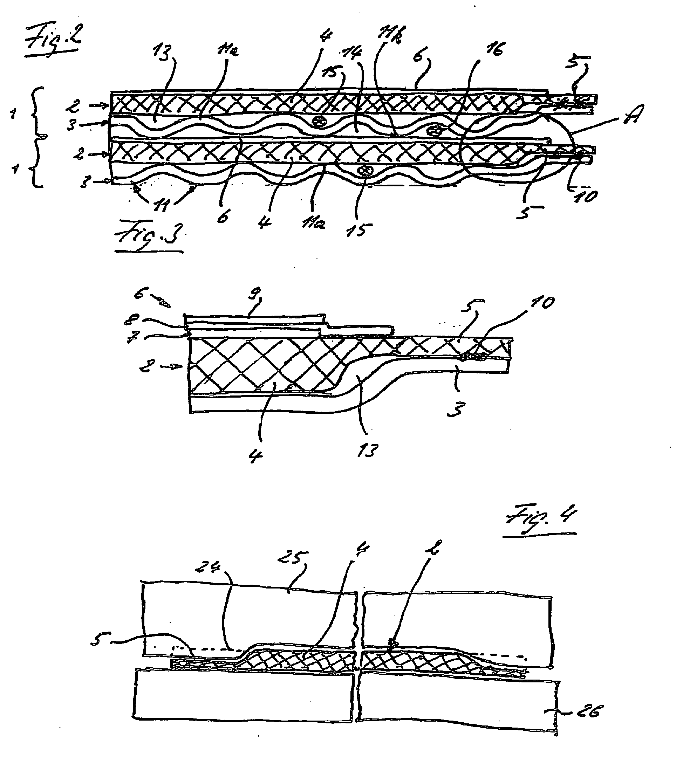

Der Substratbereich (4) ist mit den elektrochemisch aktiven Zellschichten (6) versehen, die gemäß Fig. 3 aus einer Anodenschicht (7) auf dem Substratbereich (4), einer gasdichten Elektrolytschicht (8) auf der Anodenschicht (7) und einer Kathodenschicht (9) auf der Elektrolytschicht (8) bestehen.

Die Kontaktplatte (3) kann ein Blechformteil sein, das mit einer Wellen-, Kanal- oder Noppenstruktur (11) oder dergleichen Vorsprüngen versehen ist, um Kontaktabschnitte (11a) zu bilden, die die pulvermetallurgische Platte (2) und damit die Anodenschicht (7) der einen Brennstoffzelle (1) elektrisch leitend kontaktieren, und einen Kontaktabschnitt (11k) in elektrischem Kontakt mit der Kathodenschicht (9) der benachbarten Brennstoffzelle (1).

Gemäß Fig. 2 und 3 sind die pulvermetallurgische Platte (2) und die Kontaktplatte (3) am Umfang bei (10) gasdicht verbunden, beispielsweise durch Schweißen oder Löten. Weiterhin erstreckt sich die gasdichte Elektrolytschicht (8) am Umfang zumindest über einen Teil des verdichteten Randbereichs (5) der pulvermetallurgischen Platte (2), wie aus Fig. 3 ersichtlich.

Damit wird der Raum (13) gasdicht von dem Raum (14) getrennt, indem die Kathodenschicht (9) angeordnet ist. Der Raum (13), in dem die Anodenschicht (7) gasdicht eingeschlossen ist, stellt den Brennraum dar. Ihm wird das Brenngas in Richtung des in Fig. 2 und 3 von hinten dargestellten Pfeiles (15) zugeführt. Das Brenngas kann z.B. Wasserstoff, Methan oder ein anderer Kohlenwasserstoff sein. Demgegenüber wird dem Raum (14) das Oxidationsmittel, beispielsweise Luft oder Sauerstoff entsprechend dem von hinten dargestellten Pfeil (16) zugeführt.

An der Anode (7) wird der Brennstoff, z. B. Wasserstoff, oxidiert und ihm damit Elektronen unter Kationenbildung entzogen, die über die Kontaktplatte (3) der Kathode (9) der benachbarten Zelle (1) zugeführt werden. Das Oxidationsmittel, z. B. Sauerstoff nimmt in der Kathodenreaktion Elektronen auf, sodass z. B. Sauerstoffanionen gebildet werden. Die aus dem Oxidationsmittel gebildeten Anionen diffundieren durch die Elektrolytschicht (8) und reagieren auf der Anodenseite mit den aus dem Brenngas gebildeten Kationen unter Bildung von Abgas, beispielsweise Wasserdampf oder Kohlendioxid.

Gemäß Fig. 1 ist der gasdichte verdichtete Randbereich (5) der pulvermetallurgischen Platte (2) jeder Zelle beiderseits des Substratbereichs (4) mit mehreren Gasdurchtrittsöffnungen (17) bzw. (18) versehen. Desgleichen weist die Kontaktplatte (Interkonnenktor) (3) am Randbereich Gasdurchtrittsöffnungen (19) bzw. (20) auf. Die Gasdurchtrittsöffnungen (17) bzw. (18) und die Gasdurchtrittsöffnungen (19) bzw. (20) aller Brennstoffzellen (1) des Stapels fluchten miteinander.

Während durch die Gasdurchtrittsöffnungen (17) und (19) das Brenngas dem Brenngasraum (13) zugeführt wird, wird das Abgas über die Gasdurchtrittsöffnungen (18) und (20) aus dem Brenngasraum (13) abgeführt. Durch Dichtungen (22) und (23) an den Gasdurchtrittsöffnungen (17) und (18) zweier benachbarter Brennstoffzellen (1) werden die Gasdurchtrittsöffnungen (17) bis (20) gegenüber dem Oxidationsmittelraum (14) gasdicht abgedichtet.

Die Brennstoffzellen (1) sind über die Kontaktplatte (3) in Reihe geschaltet. Das heißt, der Strom wird von der obersten Brennstoffzelle und der untersten Brennstoffzelle des Stapels abgenommen.

Gemäß Fig. 4 wird zur Herstellung der pulvermetallurgischen Platte (2) ein planarer, gesinterter, poröser Körper (24) zwischen einem Pressstempel (25) und einem Gegenstempel (26) am Rand verdichtet, um den verdichteten gasdichten Randbereich (5) und den dazwischenliegenden unverdichteten, porösen Substratbereich (4) zu bilden.

Der Pressstempel ist vorzugsweise so ausgebildet, dass beim Verdichten ein kontinuierlicher, stufenloser Übergang zwischen dem verdichteten Substratbereich (4) und dem Randbereich (5) entsteht. In den Randbereich (5) können dann auf gegenüberliegenden Seiten des Substratbereichs (4) die Gasdurchtrittsöffnungen (17, 18) geschnitten oder gestanzt werden, worauf die elektrochemisch aktive Zellschicht (6) auf dem Substratbereich (4) aufgetragen wird, und zwar die Elektrolytschicht (8) so, dass sie sich mit ihrem gesamten Umfang auf den Randbereich (5) erstreckt, wie dies in Fig. 3 dargestellt ist.

## Patentansprüche

1. Verfahren zur Herstellung einer Brennstoffzelle mit einem pulvermetallurgisch hergestellten, porösen Substrat (4), auf das die elektrochemisch aktiven Zelischichten (6) aufgetragen sind und das im zentralen Bereich einer Platte (2) angeordnet ist, in deren Randbereich (5) Gasdurchtrittsöffnungen (17, 18) vorgesehen sind, wobei die Platte (2) unter Bildung eines Substratbereichs (4) und des Randbereichs (5) einstückig ausgebildet und der Randbereich (5) gasdicht verdichtet ist, und wobei zur Bildung der Platte (2) ein planarer, pulvermetallurgischer, poröser Körper (24) hergestellt wird, der Randbereich des Körpers (24) bis zur Gasdichte verdichtet und mit den Gasdurchtrittsöffnungen (17 , 18) versehen wird und die elektrochemisch aktiven Zellschichten (6) auf den Substratbereich (4) der Platte (2) aufgetragen werden, **dadurch gekennzeichnet dass** die Verdichtung des Randbereichs des Körpers (24 ) zum Randbereich (5) der Platte (2) durch uniaxiales Pressen oder Walzen erfolgt.

2. Verfahren nach Anspruch 1, wobei sich die Elektrolytschicht (8) der elektrochemisch aktiven Zellschichten (6) gasdicht an den gasdichten Randbereich (5) der Platte (2) angrenzt.

3. Verfahren nach Anspruch 1 oder 2, wobei die Elektrolytschicht (8) der elektrochemisch aktiven Zellschichten (6) mit ihrem gesamten Umfang zumindest auf einem Teil des verdichteten Randbereichs (5) der Platte (2) erstreckt.

4. Verfahren nach einem der Ansprüche 1 bis 3, wobei die Platte (2) am Umfang gasdicht mit einer Kontaktplatte (3) verbunden ist.

5. Verfahren nach Anspruch 1, wobei dass zur Bildung des planaren, pulvermetallurgischen, porösen Körpers (24) ein Pulver mit einer Teilchengrösse von < 150 µm verwendet wird.

6. Verfahren nach Anspruch 1 oder 5, **dadurch gekennzeichnet, dass** der poröse Körper ( 24) eine Porosität von 20 bis 60% aufweist.

7. Verfahren nach Anspruch 1 oder 6, **dadurch gekennzeichnet, dass** beim Verdichten ein kontinuierlicher Übergang zwischen dem verdichteten Randbereich (5) und dem dazwischen angeordneten Substratbereich (4) der Platte (2) hergestellt wird.

8. Verfahren nach Anspruch 1, **dadurch gekennzeichnet, dass** die Elektrolytschicht (8) der elektrochemisch aktiven Zettschichten (6) so aufgetragen wird, dass sie sich zumindest auf einen Teil des verdichteten Randbereichs (5) der Platte (2) erstreckt.

9. Verfahren nach Anspruch 8, **dadurch gekennzeichnet, dass** der Randbereich (5) der Platte (2) vor dem Auftragen der Elektrolytschicht (8) aufgeraut wird.

10. Verfahren nach einem der vorangehenden Ansprüche, wobei zunächst der Körper gesintert wird um einen porösen Körper zu erhalten und anschließend die Verdichtung des Randbereichs des Körpers (24) zum Randbereich (5) der Platte (2) durch uniaxiales Pressen oder Walzen erfolgt.

## Claims

1. A method for producing a fuel cell having a porous substrate (4) produced by powder metallurgy to which the electrochemically active cell layers (6) are applied and which is disposed in the central area of a plate (2) having gas passages (17, 18) provided in the edge area (5) thereof, the plate (2) being configured in one piece so as to form a substrate area (4) and the edge area (5), and the edge area (5) being gas-tightly compressed, and a planar, powder-metallurgical, porous body (24) being produced for forming the plate (2), the edge area of the body (24) being compressed to the point of gas-tightness and provided with the gas passages (17, 18), and the electrochemically active cell layers (6) being applied to the substrate area (4) of the plate (2), **characterized in that** the compression of the edge area of the body (24) to the edge area (5) of the plate (2) is effected by uniaxial pressing or rolling.

2. The method according to claim 1, wherein the electrolyte layer (8) of the electrochemically active cell layers (6) borders gas-tightly on the gas-tight edge area (5) of the plate (2).

3. The method according to claim 1 or 2, wherein the electrolyte layer (8) of the electrochemically active cell layers (6) extends with its total circumference at least on a part of the compressed edge area (5) of the plate (2).

4. The method according to any of claims 1 to 3, wherein the plate (2) is connected on the circumference gas-tightly to a contact plate (3).

5. The method according to claim 1, wherein a powder with a particle size of < 150 µm is employed for forming the planar, powder-metallurgical, porous body (24).

6. The method according to claim 1 or 5, **characterized in that** the porous body (24) has a porosity of 20 to 60%.

7. The method according to claim 1 or 6, **characterized in that** upon compression a continuous transition is produced between the compressed edge area (5) and the intermediate substrate area (4) of the plate (2).

8. The method according to claim 1, **characterized in that** the electrolyte layer (8) of the electrochemically active cell layers (6) is so applied that it extends at least onto a part of the compressed edge area (5) of the plate (2).

9. The method according to claim 8, **characterized in that** the edge area (5) of the plate (2) is roughened before application of the electrolyte layer (8).

10. The method according to any of the preceding claims, wherein the body is first sintered to obtain a porous body, and the compression of the edge area of the body (24) to the edge area (5) of the plate (2) is then effected by uniaxial pressing or rolling.

## Revendications

1. Procédé de fabrication d'une pile à combustible avec un substrat poreux (4) fabriqué par métallurgie des poudres sur lequel sont appliquées les couches de cellules (6) électrochimiquement actives et qui est agencé dans la zone centrale d'une plaque (2), des ouvertures de passage de gaz (17, 18) sont prévues dans la zone marginale (5), la plaque (2) étant façonnée d'une seule pièce en formant une zone de substrat (4) et la zone marginale (5) et la zone marginale (5) étant étanchéifiée au gaz, et pour former la plaque (2), un corps poreux planaire issu de la métallurgie des poudres (24) étant fabriqué, la zone marginale du corps (24) est étanchéifiée jusqu'à devenir étanche aux gaz et pourvue des ouvertures de passage de gaz (17, 18) et les couches de cellules (6) actives au niveau électrochimique sont appliquées sur la zone de substrat (4) de la plaque (2), **caractérisé en ce que** l'étanchéification de la zone marginale du corps (24) jusqu'à la zone marginale (5) de la plaque (2) s'effectue par pressage ou laminage mono-axial.

2. Procédé selon la revendication 1, la couche électrolytique (8) des couches de cellules (6) électrochimiquement actives étant adjacente de manière étanche aux gaz à la zone marginale (5) étanche aux gaz de la plaque (2).

3. Procédé selon la revendication 1 ou 2, la couche électrolytique (8) des couches de cellules (6) électrochimiquement actives s'étendant avec son périmètre complet au moins sur une partie de la zone marginale (5) étanchéifiée de la plaque (2).

4. Procédé selon l'une quelconque des revendications 1 à 3, la plaque (2) étant reliée sur son périmètre de manière étanche aux gaz à une plaque de contact (3).

5. Procédé selon la revendication 1, une poudre dont la taille des particules < 150 µm étant utilisée pour former le corps poreux planaire issu de la métallurgie des poudres (24).

6. Procédé selon la revendication 1 ou 5, **caractérisé en ce que** le corps poreux (24) présente une porosité de 20 à 60 %.

7. Procédé selon la revendication 1 ou 6, **caractérisé en ce que** lors de l'étanchéification, une transition continue est créée entre la zone marginale (5) étanchéifiée et la zone de substrat (4) de la plaque (2) agencée en position intermédiaire.

8. Procédé selon la revendication 1, **caractérisé en ce que** la couche électrolytique (8) des couches de cellules (6) électrochimiquement actives est appliquée de sorte qu'elle s'étend au moins sur une partie de la zone marginale (5) étanchéifiée de la plaque (2).

9. Procédé selon la revendication 8, **caractérisé en ce que** la zone marginale (5) de la plaque (2) est rendue rugueuse avant l'application de la couche électrolytique (8).

10. Procédé selon l'une quelconque des revendications précédentes, en premier lieu, le corps étant fritté afin d'obtenir un corps poreux, et ensuite, l'étanchéification de la zone marginale du corps (24) jusqu'à la zone marginale (5) de la plaque (2) s'effectue par pressage ou laminage mono-axial.
